# EUROPÄISCHE PATENTANMELDUNG

(11) **EP 1 367 284 A1**
(43) Veröffentlichungstag der Anmeldung: **03.12.2003**
(21) Anmeldenummer: 03007299.5
(22) Anmeldetag: 01.04.2003
(51) Int. Cl.: F16D 48/02

(54) **Hydraulisch betätigte Kupplungseinrichtung mit wenigstens einem entlüftbaren bzw. spülbaren Nehmerzylinder**

(30) Priorität: 24.05.2002 DE 10222933
(71) Anmelder: ZF Sachs AG, 97424 Schweinfurt (DE)
(72) Erfinder: Kuhstrebe, Jochen, Dipl.-Phys., 97318 Westheim (DE); Busold, Thomas, Dipl.-Ing., 36039 Fulda (DE); Moseler, Olaf, Dr.-Ing., 97070 Würzburg (DE); Reisser, Wolfgang, Dipl.-Ing.(FH), 97526 Sennfeld (DE)

(57) **Zusammenfassung**

Die Erfindung betrifft unter anderem eine Kupplungseinrichtung für einen Kraftfahrzeug-Antriebsstrang zur Momentenübertragung zwischen einer Antriebseinheit und einem Getriebe des Anstriebsstrangs, umfassend wenigstens eine Kupplungsanordnung, die eine einer Abtriebswelle der Antriebseinheitzugeordnete Eingangsseite und eine einer Getriebeeingangswelle zugeordnete Ausgangsseite aufweist und die vermittels wenigstens eines in die Kupplungseinrichtung integrierten hydraulischen Nehmerzylinders betätigbar ist, der einen an wenigstens einer Zylinderwand des Nehmerzylinders verschiebbar geführten, eine Druckkammer (140a) des Nehmerzylinders begrenzenden Betätigungskolben (130a) aufweist. Es wird vorgeschlagen, wenigstens eine dem Betätigungskolben zugeordnete Umgehung (204a) in der Zylinderwand (202a) oder/und einem an der Zylinderwand geführten Abschnitt des Betätigungskolbens (130a) vorzusehen, die vermittels einer Verschiebebewegung des Betätigungskolbens zwischen wenigstens einem Wirksam-Zustand und wenigstens einem Unwirksam-Zustand umschaltbar ist, derart, dass im Wirksam-Zustand in die Druckkammer (140a) zugeführtes bzw. darin enthaltenes hydraulisches Druckmedium und - soweit vorhanden - in der Druckkammer enthaltene Luft bzw. eine darin enthaltene Luft-Druckmedium-Mischung zumindest teilweise über die Umgehung (204a) aus der Druckkammer abführbar ist und dass im Unwirksam-Zustand im Wesentlichen kein Druckmedium über die Umgehung (204a) aus der Druckkammer abführbar ist.

## Beschreibung

Die Erfindung betrifft eine Kupplungseinrichtung für einen Kraftfahrzeug-Antriebsstrang zur Momentenübertragung zwischen einer Antriebseinheit und einem Getriebe des Anstriebsstrangs, umfassend wenigstens eine Kupplungsanordnung, die eine einer Abtriebswelle der Antriebseinheit zugeordnete Eingangsseite und eine einer Getriebeeingangswelle zugeordnete Ausgangsseite aufweist und die vermittels wenigstens eines in die Kupplungseinrichtung integrierten hydraulischen Nehmerzylinders betätigbar ist, der einen an wenigstens einer Zylinderwand des Nehmerzylinders verschiebbar geführten, eine Druckkammer des Nehmerzylinders begrenzenden Betätigungskolben aufweist.

Derartige Kupplungseinrichtungen sind in verschiedensten Ausgestaltungen bekannt, sowohl als sogenannte "Einfach-Kupplungen" mit einer einer Getriebeantriebswelle zugeordneten Kupplungsanordnung sowie als sogenannte "Doppel-Kupplungen" mit zwei jeweils einer Getreibeeingangswelle zugeordneten Kupplungsanordnungen. Es wird beispielsweise auf die DE 100 04 179 A1 verwiesen, die eine Doppel- oder Mehrfachkupplungseinrichtung der nasslaufenden Lamellenkupplungsbauart in verschiedenen Ausführungsvarianten zeigt. Betreffend eine Doppelkupplung der Reibscheibenbauart kann beispielsweise auf die DE 35 26 630 A1 verwiesen werden.

Liegt an einer rotierenden Hydraulikdruckkammer, welche über eine Drehdurchführung mit Drucköl versorgt wird, längere Zeit kein Drucköl an, etwa weil die Kupplungseinrichtung bzw. das Kraftfahrzeug nicht in Betrieb ist, kann das in der Druckkammer befindliche Drucköl über die mehr oder weniger leckagebehaftete Drehdurchführung bzw. Drehdichtungen aus der Druckkammer abfließen. Bei Wiederinbetriebnahme, etwa nach einem Start des betreffenden Kraftfahrzeugs, muss dann die Druckkammer erst wieder mit Drucköl gefüllt und die Druckkammer möglichst vollständig entlüftet werden. Dies ist insbesondere deswegen erforderlich, da in der Druckkammer bzw. im Hydrauliksystem verbleibende Luft im Gegensatz zu einem hydraulischen Druckmedium kompressibel ist und deswegen das Steuer-/Regel-Verhalten des den hydraulischen Nehmerzylinder aufweisenden Hydrauliksystems in undefinierter Weise verfälschen würde.

Rotierende Druckkammern der angesprochenen Art werden nicht nur in Kupplungseinrichtungen, etwa die angesprochenen nasslaufenden Doppelkupplungen, sondern auch beispielsweise in Automatgetrieben in einer hydraulisch betätigbaren Kupplung oder Bremse zum Schalten der Getriebegänge verwendet.

Herkömmlich glaubte man teilweise, ohne spezielle Entlüftungsanordnungen bzw. Entlüftungsfunktionalitäten auszukommen. Bei der erstmaligen Befüllung eines rotierenden Druckraums füllt sich der Druckraum fliehkraftbedingt von radial außen nach radial innen, so dass die im Druckraum (noch) enthaltene Luft im radial inneren Bereich des Druckraums, also an den radial innen gelegenen Wandungen der rotierenden Kammer, angeordnet ist. Dies resultiert daraus, dass das Druckmedium, in der Regel Öl, eine höhere Dichte als die Luft aufweist. Durch Zufuhr des hydraulischen Druckmediums in die rotierende Druckkammer kann somit die darin befindliche Luft nach radial innen aus der Druckkammer heraus verdrängt werden.

In der DE 199 33 470 A1 wird vorgeschlagen, einen rotierenden Druckraum mit einem Luftabscheidekanal zu versehen, dessen Einlassöffnung am Innendurchmesser des rotierenden Druckraums oder am Innendurchmesser des rotierenden Teils der Zuführung angeordnet ist und dessen Auslassöffnung in einem Entlüftungsraum mündet. Durch diese Ausbildung wird eine Spülung des rotierenden Druckraums ermöglicht, um eine darin enthaltene Öl-Luft-Dispersion, die einen hohen Luftanteil enthält, gezielt aus dem Druckraum abzuführen. Die Spülung bzw. Luftabscheidung kann dabei kontinuierlich, beispielsweise mittels Blenden, Nuten, Bohrungen etc., oder gesteuert, beispielsweise mittels eines ansteuerbaren elektromagnetischen Ventils, eines drehzahlgesteuerten Ventils oder eines druckgesteuerten Ventils, durchgeführt werden.

In der DE 199 42 555 A1 wird betreffend ein hydraulisch betätigbares, rotierendes Schaltelement eines Automatgetriebes vorgeschlagen, in einem deaktivierten Zustand des Schaltelements den Betätigungskolben periodisch mit Druckmittelimpulsen zu beaufschlagen, um Leckageverluste auszugleichen und den Kolben in einer definierten Stellung zu halten, bzw. diesen in eine definierte Stellung zu bringen.

Die sich auf eine hydraulisch betätigbare Kupplung insbesondere eines Kraftfahrzeug-Automatgetriebes beziehende DE 100 15 779 A1 schlägt für den hydraulischen Nehmerzylinder vor, in einer Wandung des Zylindergehäuses einen Verbindungskanal derart anzuordnen, dass dessen eines Ende im Druckraum mündet und dessen anderes Ende im nichtgeschalteten Zustand der betreffenden Kupplung bzw. Bremse in einem jenseits des Kolbens angeordneten Kupplungsraum mündet und im geschalteten Zustand der Kupplung bzw. Bremse ebenfalls im Druckraum mündet.

Die DE 100 17 271 A1 offenbart im Zusammenhang mit einem Automatgetriebe für Kraftfahrzeuge eine Anordnung zur Verringerung des Luftanteils in einer Öl-Luft-Dispersion.

Zumindest bei einigen der bekannten Lösungen ist eine komplette und gesteuerte Lüftung der rotierenden Druckkammer nicht gewährleistet. Die Luft wird zwar aus der Druckkammer weitestgehend herausgedrängt, kann sich jedoch weiterhin in den Zuleitungen zu den Druckkammern befinden. Existieren komprimierbare Luftblasen in den Zuleitungen, ist das Steuer-/Regel-Verhalten des betreffenden hydraulischen Nehmerzylinders verfälscht, da den vorgesehenen Steuer-/Regel-Parametern ein inkompressibles Druckmedium zu Grunde liegt. Ideal wäre es, eine selbsttätige Entlüftung vorzusehen. Insbesondere bei langen Leitungen zwischen den Steuer-/Regel-Ventilen und der Druckkammer ist eine solche selbsttätige Entlüftung zumindest auf Grundlage herkömmlicher Ansätze kaum oder nur sehr schwer zu gewährleisten.

Sieht man permanent offene Luftabscheidekanäle vor, so bedeutet dies eine erhöhte, druckabhängige und temperaturabhängige Leckage aus der Druckkammer, welche die hydraulische Steuerung/Regelung erschwert. Schaltbare Ventile, etwa elektromagnetische Ventile, zum Sperren solcher Kanäle benötigen zusätzlichen Bauraum und in der Regel eine weitere Bohrung bzw. Leitung in der Drehzuführung, welche zumeist aus Bauraumgründen nicht realisierbar ist.

Der Erfindung liegt die Aufgabe zu Grunde, für die eingangs genannte Kupplungseinrichtung bzw. deren hydraulischen Nehmerzylinderanordnung eine Entlüftungsmöglichkeit zu schaffen, die ohne großen baulichen Aufwand realisierbar ist, insbesondere ohne externe Steuerorgane auskommt und eine selbsttätige oder quasi-selbsttätige Entlüftung, gegebenenfalls im Wege eines Spülens des Druckraums mit Druckmedium, ermöglicht.

Zur Lösung dieser Aufgabe wird erfindungsgemäß vorgeschlagen, dass wenigstens eine dem Betätigungskolben zugeordnete Umgehung in der Zylinderwand oder/und einem an der Zylinderwand geführten Abschnitt des Betätigungskolbens vorgesehen ist, die vermittels einer Verschiebebewegung des Betätigungskolbens zwischen wenigstens einem Wirksam-Zustand und wenigstens einem Unwirksam-Zustand umschaltbar ist, derart, dass im Wirksam-Zustand in die Druckkammer zugeführtes bzw. darin enthaltenes hydraulisches Druckmedium und - soweit vorhanden - in der Druckkammer enthaltene Luft bzw. eine darin enthaltene Luft-Druckmedium-Mischung zumindest teilweise über die Umgehung aus der Druckkammer abführbar ist und dass im Unwirksam-Zustand im Wesentlichen kein Druckmedium über die Umgehung aus der Druckkammer abführbar ist.

Die erfindungsgemäße Ausbildung des hydraulischen Nehmerzylinders ermöglicht ein gesteuertes Ein- und Ausschalten des Entlüftungs- bzw. Spülvorgangs in Abhängigkeit von der Stellung des Betätigunskolbens, so dass aufwändige Entlüftungskanäle und diesen zugeordnete Ventile entbehrlich sind. Der Betätigungskolben kann beispielsweise in einem Positionsbereich einen Entlüftungsweg zur drucklosen Seite des Betätigungskolbens freigeben und in einem anderen Betätigungsbereich den Entlüftungsweg gegenüber der drucklosen Kolbenseite verschließen.

Nach einer besonders bevorzugten Ausführungsform ist vorgesehen, dass der Betätigungskolben in einer ersten Verschiebeposition oder einem ersten Verschiebepositionsbereich, der/die einem Bereich niedrigen Betätigungsdrucks oder/und verschwindendem Betätigungsdruck in der Druckkammer zugeordnet ist, einen ersten Unwirksam-Zustand einstellt, dass der Betätigungskolben in einer zweiten Verschiebeposition oder einem zweiten Verschiebepositionsbereich, der/die einem erhöhten Betätigungsdruck oder einem Bereich erhöhten Betätigungsdrucks in der Druckkammer zugeordnet ist, den Wirksam-Zustand einstellt und dass der Betätigungskolben in einer dritten Verschiebeposition oder einem dritten Verschiebepositionsbereich, der/die einem noch höheren Betätigungsdruck oder einem Bereich noch höheren Betätigungsdrucks zugeordnet ist, einen zweiten Unwirksam-Zustand einstellt.

Dadurch, dass der erste Unwirksam-Zustand dem Bereich niedrigen Betätigungsdrucks bzw. dem verschwindenden Betätigungsdruck zugeordnet ist, wird gewährleistet, dass in dem Falle, dass der Betätigungskolben nicht oder nur gering mit Druck beaufschlagt ist, etwa bei stillstehendem Kraftfahrzeug bzw. nicht eingerückter Kupplung im Falle einer Kupplung des NORMALERWEISE-OFFEN-TYPS, der Druckraum über die Umgehung nicht leerlaufen kann oder zumindest dass keine wesentliche Leckage über die Umgehung stattfindet. Würde der Druckraum in einem derartigen Zustand leerlaufen, so würde das an sich zu behebende Problem des Auftretens von Luft im Hydrauliksystem in der Tat noch verschärft werden.

Man kann aber durchaus im Rahmen der Ausführung der Erfindung auch vorsehen, dass der Betätigungskolben in einer ersten Verschiebeposition oder einem ersten Verschiebepositionsbereich, der/die einem Bereich niedrigen Betätigungsdrucks oder/und verschwindendem Betätigungsdruck in der Druckkammer zugeordnet ist, den Wirksam-Zustand einstellt und dass der Betätigungskolben in einer zweiten Verschiebeposition oder einem zweiten Verschiebepositionsbereich, der/die einem höheren Betätigungsdruck oder einem Bereich höheren Betätigungsdrucks in der Druckkammer zugeordnet ist, den Unwirksam-Zustand einstellt. Nach dieser Lösung ist zwar ein Leerlaufen der Druckkammer über die Umgehung in einem "Ruhezustand" des Systems zu befürchten und demgemäß mit einem erhöhten Entlüftungsbedarf zu rechnen. Gleichwohl mag man in einer Abwägung zu dem Ergebnis kommen, dass die Vorteile gegenüber herkömmlichen Lösungen mit permanent offenen Entlüftungskanälen und externen, die Entlüftung steuernden Organen überwiegen, da jedenfalls mit großer Zuverlässigkeit für eine selbsttätige bzw. quasi-selbsttätige Entlüftung bzw. Spülung der Druckkammer im Zuge der Kupplungsbetätigung gewährleistet werden kann.

Eine besonders bevorzugte Ausgestaltung zeichnet sich dadurch aus, dass die Umgehung bei Erhöhung des Drucks in der Druckkammer vor Erreichen des Schleifpunkts der Kupplungsanordnung vom Wirksam-Zustand in den Unwirksam-Zustand bzw. den zweiten Unwirksam-Zustand übergeht. Dies ermöglicht, dass die Kupplung bzw. Kupplungsanordnung in einer Position nahe des Schleifpunktes gehalten werden kann, ohne dass eine wesentliche Leckage durch die Umgehung stattfindet.

Bei Kupplungseinrichtungen, die mittels einer in die Kupplungseinrichtung integrierten hydraulischen Nehmerzylinderanordnung betätigbar sind, kann es zweckmäßig sein, eine dem Betätigungskolben zugeordnete Fliehkraft-Druckausgleichskammer vorzusehen, wobei der Betätigungskolben die Druckkammer von der Druckausgleichskammer trennt. Die Fliehkraft-Druckausgleichskammer nimmt im Betrieb ein Druckausgleichsmedium auf, das fliehkraftbedingten Druckerhöhungen in der Druckkammer entgegenwirkt. Für eine derartige Ausführung der Kupplungseinrichtung wird vorgeschlagen, dass die Umgehung im Wirksam-Zustand aus der Druckkammer in die Fliehkraft-Druckausgleichskammer führt.

Die Erfindungsvorschläge können sich auf eine Kupplungseinrichtung mit wenigstens einer Lamellen-Kupplungsanordnung beziehen, wobei insbesondere an eine nasslaufende Lamellen-Kupplungsanordnung mit wenigstens einem Lamellenpaket gedacht wird, dem im Betrieb ein Kühlmediumstrom, insbesondere Kühlölstrom, zugeführt wird, um Reibungswärme abzuführen. Für eine derartig ausgelegte Kupplungseinrichtung wird vorgeschlagen, dass aus der Druckkammer über die Umgehung abgeführtes Fluid (hydraulisches Druckmedium bzw. Luft-Druckmedium-Mischung bzw. Luft) dem Kühlmediumstrom zuleitbar ist.

Der Betätigungskolben und die Zylinderwand können unter der Vermittlung einer wenigstens eine Dichtung aufweisenden Dichtungs- und Führungsanordnung im gegenseitigen Dichtungs- und Führungseingriff stehen. Die Dichtungs- und Führungsanordnung kann wenigstens einen Dichtungsabschnitt und wenigstens einen gegenüber dem Dichtungsabschnitt in Verschieberichtung des Betätigungskolbens versetzten Führungsabschnitt aufweisen. Für eine derartige Ausgestaltung der Kupplungseinrichtung wird vorgeschlagen, dass der Führungsabschnitt wenigstens einen Durchlass aufweist, der Teil der Umgehung ist oder im Wirksam-Zustand einen Abfluss von über die Umgehung aus der Druckkammer zugeführtem Fluid ermöglicht. Es ergibt sich der Vorteil, dass auf Grundlage des Dichtungsabschnitts in Verbindung mit der Umgehung im Sinne eines Umschaltens zwischen den angesprochenen Zuständen definierte "Schaltpunkte" bzw. "Schaltpositionen" des Betätigungskolbens einstellbar sind, ohne Kompromisse hinsichtlich einer sicheren Führung des Kolbens an der Zylinderwand eingehen zu müssen. Beispielsweise kann am Dichtungsabschnitt bzw. als Dichtungsabschnitt eine in Bewegungsrichtung des Kolbens vergleichsweise schmal ausgeführte Dichtungslippe vorgesehen sein, die wohldefinierte ("scharfe") Schaltpunkte bzw. Schaltpositionen gewährleistet.

Allgemein kann die Dichtungs- und Führungsanordnung wenigstens einen Dichtungsring umfassen, der einen Führungs- oder Stützwulst als Führungsabschnitt und eine Dichtungslippe als Dichtungsabschnitt aufweist. Der Stütz- oder Führungswulst kann mehrere in Umfangsrichtung gegeneinander versetzte Aussparungen aufweisen, die als Durchlässe dienen.

Hinsichtlich der baulichen Ausführungen der Umgehung bestehen diverse Möglichkeiten. Beispielsweise kann die Umgehung wenigstens eine Aussparung oder Öffnung oder Fase in oder an der Zylinderwand aufweisen, bzw. von einer derartigen Aussparung oder Öffnung oder Fase gebildet sein. Eine andere Möglichkeit ist, dass die Umgehung wenigstens eine Aussparung oder Öffnung oder Fase in oder an dem an der Zylinderwand geführten Abschnitt des Bedienungskolbens aufweist, bzw. von einer derartigen Aussparung oder Öffnung oder Fase gebildet ist.

Besonders bevorzugt ist eine Ausbildung der Aussparung in Form einer sich im Wesentlichen in der Verschieberichtung des Betätigungskolbens erstreckenden Nut. Ebenfalls sehr zweckmäßig ist eine Ausbildung der Aussparung in Form einer sich im Wesentlichen orthogonal zu der Verschieberichtung des Betätigungskolbens erstreckenden Nut, vorzugsweise in Form einer Ringnut. Beispielsweise können zwei in Verschieberichtung der Kolben beabstandete Nuten vorgesehen sein, die miteinander verbunden sind und gemeinsam - mit ihrer Verbindung - die Umgehung bilden.

Die jeweilige Nut kann an wenigstens einem diese begrenzenden Rand mit einer Fase ausgeführt sein. Dies ist insbesondere dann besonders zweckmäßig, wenn eine über die Nut hinweggleitende Dichtungs- und Führungsanordnung vorgesehen ist, da die Fase einem übermäßigen Verschleiß dieser Dichtungs- und Führungsanordnung etwa durch Abrieb an den Nuträndern entgegenwirkt. Ferner wirkt die Fase auch dem Auftreten von Gegen- bzw. Beharrungskräften gegen die Verschiebebewegung des Betätigungskolbens auf Grund eines Eingriffs zwischen der Dichtungs- und Führungsanordnung und der Nut entgegen.

Nach einer weiteren Ausgestaltungsmöglichkeit ist vorgesehen, dass die Umgehung wenigstens einen eine Eingangsöffnung und eine Ausgangsöffnung aufweisenden Kanal in wenigstens einem die Zylinderwand bildenden Bauteil oder/und in dem an der Zylinderwand geführten Abschnitt des Betätigungskolbens aufweist, wobei der Kanal vorzugsweise von wenigstens einer Bohrung gebildet ist.

Die Erfindung betrifft ferner eine hydraulische Nehmerzylinderanordnung, umfassend wenigstens einen hydraulischen Nehmerzylinder, der einen an wenigstens einer Zylinderwand des Nehmerzylinders verschiebbar geführten, eine Druckkammer des Nehmerzylinders begrenzenden Betätigungskolben aufweist.

Erfindungsgemäß ist wenigstens eine dem Betätigungskolben zugeordnete Umgehung in der Zylinderwand oder/und einem an der Zylinderwand geführten Abschnitt des Betätigungskolbens vorgesehen, die vermittels einer Verschiebebewegung des Betätigungskolbens zwischen wenigstens einem Wirksam-Zustand und wenigstens einem Unwirksam-Zustand umschaltbar ist, derart, dass im Wirksam-Zustand in die Druckkammer zugeführtes bzw. darin enthaltenes hydraulisches Druckmedium und - soweit vorhanden - in der Druckkammer enthaltene Luft bzw. eine darin enthaltene Luft-Druckmedium-Mischung zumindest teilweise über die Umgehung aus der Druckkammer abführbar ist und dass im Unwirksam-Zustand im Wesentlichen kein Druckmedium über die Umgehung aus der Druckkammer abführbar ist.

Nach der Erfindung wird für eine derartige hydraulische Nehmerzylinderanordnung nach einem ersten Aspekt ferner vorgeschlagen, dass der Betätigungskolben in einer ersten Verschiebeposition oder einem ersten Verschiebepositionsbereich, der/die einem Bereich niedrigen Betätigungsdrucks oder/und verschwindendem Betätigungsdruck in der Druckkammer zugeordnet ist, einen ersten Unwirksam-Zustand einstellt, dass der Betätigungskolben in einer zweiten Verschiebeposition oder einem zweiten Verschiebepositionsbereich, der/die einem erhöhten Betätigungsdruck oder einem Bereich erhöhten Betätigungsdrucks in der Druckkammer zugeordnet ist, den Wirksam-Zustand einstellt und dass der Betätigungskolben in einer dritten Verschiebeposition oder einem dritten Verschiebepositionsbereich, der/die einem noch höheren Betätigungsdruck oder einem Bereich noch höheren Betätigungsdrucks zugeordnet ist, einen zweiten Unwirksam-Zustand einstellt.

Nach einem zweiten Aspekt wird für die angesprochene hydraulische Nehmerzylinderanordnung vorgeschlagen, dass der Betätigungskolben und die Zylinderwand unter Vermittlung einer wenigstens eine Dichtung aufweisenden Dichtungs- und Führungsanordnung in gegenseitigem Dichtungs- und Führungseingriff stehen, die wenigstens einen Dichtungsabschnitt und wenigstens einen gegenüber dem Dichtungsabschnitt in Verschieberichtung des Betätigungskolbens versetzten Führungsabschnitt aufweist, wobei der Führungsabschnitt wenigstens einen Durchlass aufweist, der Teil der Umgehung ist oder im Wirksam-Zustand einen Abfluß von über die Umgehung aus der Druckkammer zugeführtem Fluid ermöglicht. Die Erfindungsvorschläge nach dem ersten und dem zweiten Aspekt sind unabhängig voneinander oder - besonders vorteilhaft - in Kombination miteinander realisierbar.

Bei der Nehmerzylinderanordnung kann es sich um eine für eine Rotation um eine Drehachse ausgebildete bzw. entsprechend angeordnete Nehmerzylinderanordnung handeln. In diesem Fall ist es zweckmäßig, die Umgehung in einer die Druckkammer nach radial innen begrenzenden Zylinderwand bzw. in einem radial inneren Abschnitt des Betätigungskolbens auszuführen.

Bei der Nehmerzylinderanordnung kann es sich um eine Nehmerzylinderanordnung in einer Kupplungseinrichtung für einen Kraftfahrzeug-Antriebsstrang handeln, beispielsweise um die Nehmerzylinderanordnung der erfindungsgemäßen Kupplungseinrichtung wie oben erläutert. Die Nehmerzylinderanordnung kann entsprechend der Nehmerzylinderanordnung der erfindungsgemäßen Kupplungseinrichtung ausgeführt sein und dementsprechend insbesondere die sich auf die Umgehung bzw. den wenigstens einen Nehmerzylinder beziehenden Merkmale der erfindungsgemäßen Kupplungsanordnung und deren Weiterbildungen aufweisen.

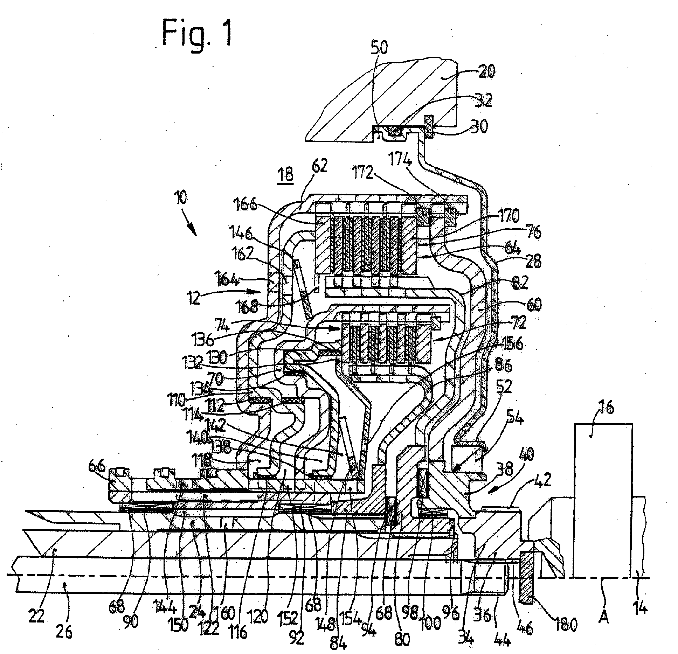

Die Erfindung wird im Folgenden anhand von in den Figuren gezeigten Ausführungsbeispielen erläutert, wobei ohne Beschränkung der Allgemeinheit von einer in Figur 1 gezeigten Doppelkupplung des nasslaufenden Lamellen-Typs entsprechend einer Konstruktion der Anmelderin ausgegangen wird, die in der DE 100 04 179 A1 im Detail beschrieben ist. Die Erfindung bezieht sich allgemein aber auf beliebige Kupplungseinrichtungen für einen Kraftfahrzeug-Antriebsstrang mit wenigstens einem in die Kupplungseinrichtung integrierten hydraulischen Nehmerzylinder sowie überdies auch ganz allgemein auf hydraulische Nehmerzylinderanordnungen für im Prinzip beliebige Anwendungen und Einbau- und Betriebssituationen.
- Fig. 1: zeigt in einer teilgeschnittenen Darstellung eine in einem Antriebsstrang eines Kraftfahrzeugs zwischen einem Getriebe und einer Antriebseinheit angeordnete Doppelkupplung mit zwei Lamellen-Kupplungsanordnungen, die eine Ausführungsvariante einer in offengelegten deutschen Patentanmeldungen offenbarten Doppelkupplungskonstruktion der Anmelderin entspricht und einen möglichen Ausgangspunkt für die Erfindung darstellt.
- Fig. 2: zeigt in den Teilfiguren 2a und 2b schematisch einen Ausschnitt des hydraulischen Nehmerzylinders einer Kupplungseinrichtung, beispielsweiseeine Doppelkupplung entsprechend oder ähnlich zu Figur 1.
- Fig. 3: zeigt in den Teilfiguren 3a, 3b, und 3c verschiedene Betriebszustände eines hydraulischen Nehmerzylinders, der einer Ausführungsvariante des hydraulischen Nehmerzylinders der Figur 2 entspricht.
- Fig. 4: zeigt einen dem Betätigungskolben des hydraulischen Nehmerzylinders der Figur 3 zugeordneten Dichtungsring nach Schnitt IV-IV in Teilfigur 3c.
- Fig. 5: zeigt eine Ausführungsmöglichkeit für eine erfindungsgemäße Umgehung in einer Zylinderwand des hydraulischen Nehmerzylinders, nämlich in Form einer oder mehrerer sich in Bewegungsrichtung des Kolbens erstreckender Nuten in der Zylinderwand.
- Fig. 6: zeigt eine weitere Ausführungsmöglichkeit einer erfindungsgemäßen Umgehung, nämlich mit wenigstens einer sich im wesentlichen orthogonal zur Bewegungsrichtung erstreckenden Nut, gegebenenfalls Ringnut, in der Zylinderwand.
- Fig. 7: veranschaulicht eine weitere Ausführungsmöglichkeit einer erfindungsgemäßen Umgehung.
- Fig. 8: veranschaulicht eine Möglichkeit, wie eine Umgehung nach der Erfindung in den Betätigungskolben des hydraulischen Nehmerzylinders eingearbeitet sein könnte.
- Fig. 9: zeigt eine weitere Möglichkeit, wie eine Umgehung nach der Erfindung in den Betätigungskolben des hydraulischen Nehmerzylinders eingearbeitet sein könnte.

Fig. 1 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur eine Abtriebswelle 14, gegebenenfalls Kurbelwelle 14, mit einem zur Ankopplung eines nicht dargestellten Torsionsschwingungsdämpfers dienenden Koppelende 16 dargestellt. Das Getriebe ist in Fig. 1 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle 26 angeordnet, die zum Antrieb einer getriebeseitigen, in Fig. 1 nicht dargestellten Ölpumpe dient.

Als Eingangsseite der Doppelkupplung 12 dient eine von den Teilen 36 und 38 gebildete Kupplungsnabe 34, die sich durch eine zentrale Öffnung des Deckels 28 in Richtung zur Antriebseinheit erstreckt und über eine Außenverzahnung 42 mit dem nicht dargestellten Torsionsschwingungsdämpfer gekoppelt ist.

An der Nabe 34 ist ein auch als "Momentenübertragungsglied" oder "Mitnehmer" bezeichenbares Trägerblech 60 drehfest angebracht, das zur Drehmomentübertragung zwischen der Nabe 34 und einem Außenlamellenträger 62 einer ersten Lamellen-Kupplungsanordnung 64 dient. Das Trägerblech 60 greift hierzu mit einer Verzahnung in die die Außenlamellen im Sinne einer Drehmitnahme ankoppelnde Verzahnung des Außenlamellenträgers 62 ein. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Die beiden Außenlamellenträger 62 und 70 sind durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung oder dergleichen ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung oder dergeichen ein Nabenteil 84 eines Innenlamellenträgers 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten beziehungsweise zweiten Lamellen-Kupplungsanordnung 64 bzw. 72.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens.

Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einer an einer Druckmediumsversorgung, hier die bereits erwähnte Ölpumpe, angeschlossenen Drucksteuereinrichtung, ggf. ein Steuerventil, in Verbindung, wobei der Druckmediumskanal 122 über eine das Ringteil 66 aufnehmende, ggf. getriebefeste Anschlusshülse an der Drucksteuereinrichtung angeschlossen ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren Druckmediumskanal 144 in entsprechender Weise wie die Druckkammer 118 an einer/der Drucksteuereinrichtung angeschlossen. Mittels der Drucksteuereinrichtung(en) kann an den beiden Druckkammern 118 und 140 wahlweise (ggf. auch gleichzeitig) von der Druckmediumsquelle (hier Ölpumpe) aufgebrachter Druck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen (im Betrieb) der Doppelkupplung 112, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 133 im Fahrbetrieb mit der Kupplungswelle 14 mitdrehen, kommt es auch ohne Druckanlegung an den Druckkammern 118 und 140 von seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Bei der in Fig. 1 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150. An einer Kühlölzufuhrströmung zwischen dem Ringteil 66 und der Getriebeeingangswelle 24, die im Betrieb die Lamellenpakete mit Kühlöl versorgt, sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom.

Betreffend weitere Einzelheiten und vorteilhafte Ausgestaltungen der Doppelkupplung 12 wird auf die Offenlegungsschriften DE 100 04 179 A1, DE 100 04 186 A1, DE 100 04 189 A1, DE 100 04 190 A1, DE 100 04 195 A1 verwiesen, deren Offenbarung in den Offenbarungsgehalt der vorliegenden Anmeldung einbezogen wird. Es wird hierzu darauf hingewiesen, dass Fig. 1 der vorliegenden Anmeldung der Fig. 1 dieser zu einer Patentfamilie gehörenden Anmeldungsserie entspricht.

Zur Kupplungskonstruktion gemäß Fig. 1 ist noch folgendes auszuführen: Die Druckkammern 118 und 140 sind über eine gegebenenfalls das Ringteil 66 umfassende Drehdurchführung an einer fahrzeugstationären hydraulischen Druckmittelversorgung, insbesondereeiner Steuer/Regel-Ventilanordnung angeschlossen. Selbst wenn man großen Aufwand hinsichtlich der Dichtheit einer Drehdurchführung treibt, ist mit einer gewissen Leckage an der Drehdurchführung sowie gegebenenfalls auch an anderen Stellen des Hydrauliksystems zu rechnen, so dass die im Betrieb mit Hydraulikmedium gefüllten Druckkammern dann, wenn über eine längere Zeit kein hydraulisches Druckmedium anliegt, beispielsweise bei stillstehendem Kraftfahrzeug, das Hydraulikmedium über die genannten, zum Teil systembedingten Leckagestellen abfließen kann, so dass die Druckkammern mehr oder weniger stark leer laufen. Bei Wiederinbetriebnahme muss die jeweilige Druckkammer dann erst wieder mit Druckmedium, insbesondere Drucköl, gefüllt werden, bevor eine einwandfreie Funktion des jeweiligen hydraulischen Nehmerzylinders gewährleistet ist. Die Befüllung der Druckkammern geht einher mit einer entsprechenden Entlüftung der Druckkammern.

Herkömmlich hat man bei einer Kupplungseinrichtung der in Fig. 1 gezeigten Art auf spezielle Maßnahmen und Einrichtungen zur Entlüftung verzichtet. Bei einer erstmaligen Befüllung der rotierenden Druckräume bzw. einer erneuten Befüllung der rotierenden Druckräume nach einem Fahrzeugstillstand befindet sich die darin enthaltene Luft fliehkraftbedingt an den radial innen gelegenen Wandungen der rotierenden Druckräume, da das hydraulische Druckmedium eine höhere Dichte als Luft aufweist. Durch die Zufuhr von Druckmedium in die rotierende Druckkammer wird die darin befindliche Luft aus der jeweiligen Druckkammer nach radial innen verdrängt und kann dann im Prinzip über die genannten bzw. speziell hierfür vorgesehene Leckagen entweichen. So kann zwar die Luft aus der Druckkammer im Prinzip weitestgehend aus der Druckkammer herausgedrängt werden; in den Zuleitungen zu den Druckkammern kann dann aber Luft auftreten, die im Gegensatz zum hydraulischen Druckmedium, insbesondere Hydrauliköl, komprimierbar ist, so dass das Steuer/Regel-Verhalten der hydraulischen Nehmerzylinder bzw. der jeweils zugeordneten Kupplungsanordnung entsprechend verfälscht wird.

Demgegenüber werden im Folgenden konkrete Lösungsvorschläge vorgestellt, die auf einer dem jeweiligen Betätigungskolben zugeordneten "Umgehung" beruhen, durch die eine Entlüftung der jeweiligen Druckkammer im Wege eines durch den Betätigungskolben selbst gesteuerten "Spülvorgangs" ermöglicht wird. Durch die Steuerung dieses "Spülvorgangs" durch den Betätigungskolben kann eine selbsttätige oder quasi-selbsttätige Entlüftung auf einfache Weise realisiert werden.

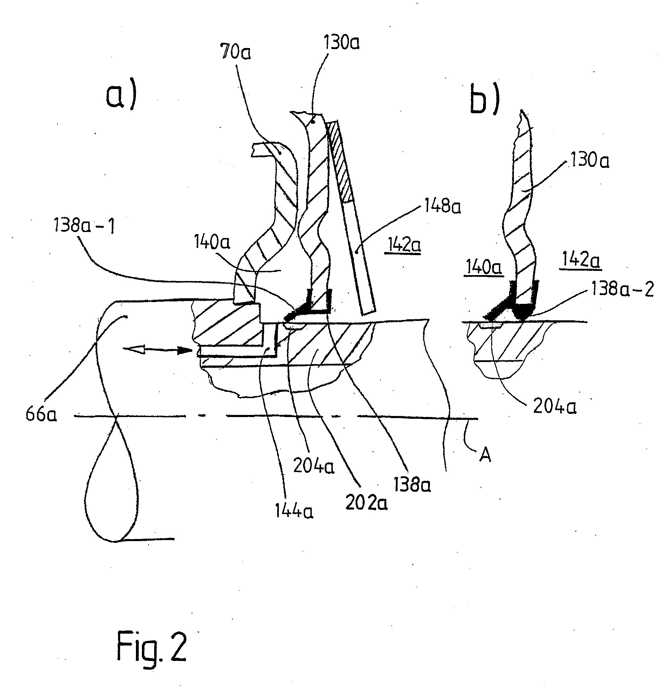

Es wird im Folgenden davon ausgegangen, dass die in Fig. 2 bis 9 gezeigten Ausführungsformen sich auf eine Doppelkupplung der in Fig. 1 gezeigten Grundkonstruktion beziehen und insoweit als Ausführungsvarianten dieser Doppelkupplung aufgefasst werden können. Es werden dementsprechend für identische, analoge oder entsprechende Bauteile die gleichen Bezugszeichen wie in Fig. 1 verwendet, unter Nachstellung eines die jeweilige Ausführungsform bzw. Ausführungsvariante kennzeichnenden kleinen Buchstabens. Es werden hier nur die Änderungen gegenüber der Konstruktion gemäß Fig. 1 angesprochen und erläutert; ansonsten wird auf die vorstehende Beschreibung zu Fig. 1 und den Inhalt der DE 100 04 179 A1 verwiesen. Es wird noch darauf hingewiesen, dass die Figuren 2 bis 9 die jeweiligen Komponenten der Kupplungseinrichtung schematisch und nicht unbedingt maßstabsgetreu zeigen, und dass darin auch noch weitere, für die Erfindung unwesentliche Änderungen gegenüber Fig. 1 erkennbar sind, die für den Fachmann ohne weiteres verständlich sind und insoweit einer Erläuterung nicht bedürfen.

Fig. 2 zeigt schematisch den hydraulischen Nehmerzylinder einer der beiden Kupplungsanordnungen einer Doppelkupplung der in Fig. 1 gezeigten Grundkonstruktion, wobei hier davon ausgegangen wird, dass der der radial inneren Lamellen-Kupplungsanordnung 72 zugehörige hydraulische Nehmerzylinder dargestellt ist. Zu erkennen ist ein Abschnitt des zu dieser Kupplungsanordnung zugehörigen Außenlamellenträgers 70a, ein Abschnitt des Betätigungskolbens 130a, die diesen Kolben in eine einem nicht eingerückten Zustand der Kupplungsanordnung entsprechende Ruheposition vorspannende Membranfeder 148a und eine die Druckkammer 140a entlang des Innenumfangs des Kolbens 130a in Richtung zur Fliehkraft-Druckausgleichskammer 142a abdichtende Dichtungsanordnung in Form eines Dichtungsringes 138a, die zugleich die Führung des Kolbens 130a an dem Außenumfang des Ringteils 66a vermittelt.

Die Dichtung 138a weist eine ringförmige Dichtungslippe 138a-1 und einen in Umfangsrichtung mehrfach unterbrochenen Stütz- oder Führungswulst 138a-2 auf, was im Folgenden noch näher erläutert wird. Ein Zuführungskanal zur Zufuhr von hydraulischem Druckmedium in die Druckkammer 140a und insbesondere zur Beaufschlagung des Kolbens 130a mit einem diesen entgegen der Rückstellkraft der Membranfeder 148a verschiebenden Betätigungsdruck ist in Fig. 2 mit 144a bezeichnet. Dem Kolben 130a oder genauer der sich mit dem Kolben 130a in axialer Richtung bewegenden Dichtungslippe 138a-1 ist in der die Druckkammer 140a nach radial innen begrenzenden Wandung 202a eine Aussparung 204a zugeordnet, durch die in der Druckkammer 140a enthaltenes bzw. in diese zugeleitetes Fluid (Druckmedium bzw. Druckmedium-Luft-Gemisch bzw. Luft) unter Umgehung der Dichtungslippe 138a-1, nach radial innen, in die Fliehkraft-Druckausgleichskammer 142a entweichen kann, und zwar nur in einer bestimmten Position bzw. einem bestimmten Positionsbereich des Betätigungskolbens 130a entsprechend Fig. 2. Eine zur dichtenden Anlage an dem Außenumfang des Ringteils 66a vorgesehene Dichtkante der Dichtungslippe 138a-1 ist dann im Axialbereich der auch als Umgehung bezeichenbare Aussparung 204a angeordnet, so dass Fluid an dieser Dichtkante vorbei in die Umgehung eintreten, die Dichtkante "umgehen" und auf der anderen Seite der Dichtkante wieder aus der Umgehung austreten und damit in die Fliehkraft-Druckausgleichskammer eintreten kann.

Fig. 2a zeigt den Kolben 130a in einer Position, die er im drucklosen Zustand der Druckkammer 140a einnimmt. Die Feder 148a drückt den Kolben dann vom zugeordneten Lamellenpaket weg gegen einen Anschlag. Die Feder 138a kann dabei zudem die Funktion haben, den Kolben 130a gegen eine Rotation relativ zum auch als Nabe bezeichenbaren Ringteil 66a und dem Lamellenträger 70a zu sichern. Eine solche Relativrotation könnte die Dichtung 138a übermäßig verschleißen.

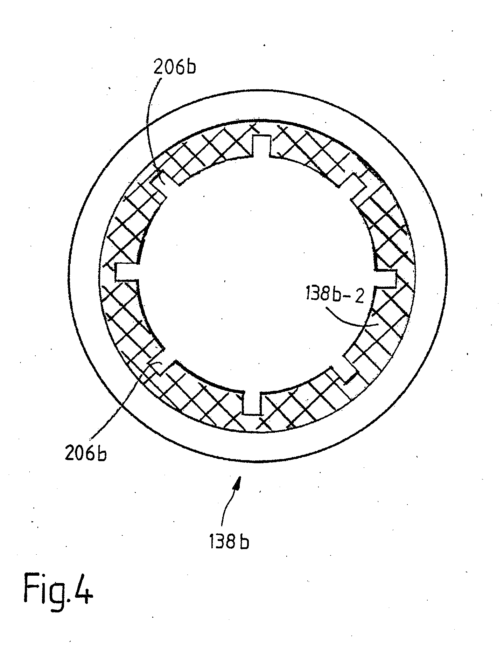

Fig. 2b zeigt den Kolben 130a in einer geringfügig in Richtung zum zugeordneten Lamellenpaket verrückten Position entsprechend einem nur vergleichsweise geringen Betätigungsdruck in der Druckkammer 140a. Die den Figuren 2a und 2b zu Grunde liegenden Schnitte sind in Umfangsrichtung leicht gegeneinander versetzt. Gemäß Fig. 2a geht der Schnitt durch eine Unterbrechung der Führungswulst 138a-2, während im Falle der Fig. 2b der Schnitt durch einen Materialabschnitt der Führungswulst geht. Die Unterbrechung bzw. die Unterbrechungen des Führungswulstes dienen als Durchlässe zum Durchlassen des aus der Umgehung 204a austretenden Fluids in die Druckausgleichskammer 142a. Es wird in diesem Zusammenhang auf Fig. 4 verwiesen, die einen entsprechend ausgeführten Dichtungsring zeigt.

Im Zuge einer Kupplungsbetätigung wird der Betätigungskolben 130a durch den in der Druckkammer 140a herrschenden Druck von der "Ruheposition" entsprechend Fig. 2a, in der die angesprochene Dichtkante der Dichtungslippe 138a-1 sich in einem ersten Endbereich der Umgehung befindet (derart, dass ein Abfluss von Fluid aus der Druckkammer 140a durch die Umgehung 204a in die Druckausgleichskammer 142a möglich ist) über die Stellung entsprechend Fig. 2b, in der die Dichtungskante sich in einem mittleren Bereich der Umgehung befindet, immer weiter in Richtung zum Lamellenpaket (in Fig. 2 nach rechts) verschoben. Dabei überfährt die Dichtungskante schließlich einen zweiten, in Fig. 2 rechten Endbereich der Umgehung, so dass sich schließlich beide Endbereiche der Umgehung vollständig in der Druckkammer 140a befinden und die Druckkammer dementsprechend durch die am Außenumfang des Ringteils 66a ringsum anliegende Dichtungslippe zur Druckausgleichskammer 142a abgedichtet ist. Die Aussparung bzw. Umgehung 204a kann dann, sobald die Dichtungslippe das in Fig. 2 rechte Ende der Umgehung in Richtung nach rechts überfahren hat, ihre ein Spülen und Entlüften ermöglichende "Umgehungsfunktion" in Bezug auf die Dichtungslippe nicht mehr erfüllen.

Bewegt sich der Betätigungskolben 130a hingegen wieder entsprechend einem abnehmenden Druck in der Druckkammer 140a in Richtung zur Ruheposition, so wird das rechte Ende der Umgehung von der Dichtungslippe in Richtung nach links überfahren, so dass die Dichtungskante der Dichtungslippe sich wieder im Bereich der Umgehung 204a befindet und dementsprechend die Umgehung wieder ihre vorstehend erläuterte "Umgehungsfunktion" erfüllen kann. Durch die Verschiebung des Betätigungskolbens 130a in Einrückrichtung der Kupplung wird die Umgehung also unwirksam-geschaltet (die Umgehung befindet sich dann in einem "Unwirksam-Zustand"), und durch die Bewegung des Betätigungskolbens 130a in der Ausrückrichtung der Kupplung wird die Umgehung wieder wirksamgeschaltet (die Umgehung befindet sich dann in einem "Wirksam-Zustand").

Man kann zweckmäßigerweise vorsehen, dass zur Betätigung der Kupplungsanordnung, also zum "Zusammendrücken" des Lamellenpakets zuerst eine Gegenkraft der Feder 148a überwunden werden muss, die ca. 20% der Kraft ausmacht, welche für eine maximale Drehmomentübertragung aufgewendet werden muss. Zweckmäßig ist es, in einem ersten Druckbereich von beispielsweise ca. 0-2 bar vorzusehen, dass die Umgehung durch den Betätigungskolben bzw. die Dichtungslippe 138a-1 freigegeben ist, die Umgehung also den Wirksam-Zustand einnimmt, und dass in einem dem Steuer-/Regelbereich der Kupplung entsprechenden Bereich die gegebenenfalls auch als "Spülkanal" bezeichenbare Umgehung den Unwirksam-Zustand einnimmt, also kein Abfließen von Fluid aus der Druckkammer 140a in die Druckausgleichskammer 142a mehr ermöglicht. Es kann hierdurch gewährleistet werden, dass ein Entlüften oder Spülen der Druckkammer 140a nicht zeitgleich mit einer Drehmomentübertragung der betreffenden Kupplungsanordnung stattfindet und auf Grund undefinierter Zustände die Regelung/Steuerung des Kupplungsmomentes stört. Besonders bevorzugt ist eine Ausgestaltung des Druckbereichs derart, dass in der Nähe des Schleifpunktes der Kupplungsanordnung (beispielsweise bei einem Hydraulikdruck in der Druckkammer von etwa 1,5 bis 2 bar) das Spülen der Druckkammer durch die Umgehung bereits beendet ist, so dass der Betätigungskolben in einer Position nahe des Schleifpunktes gehalten werden kann, ohne dass eine Leckage durch die Umgehung stattfindet.

Gegenüber einer Zuordnung eines Wirksam-Zustands und eines Unwirksam-Zustands zu den Positionen des Betätigungskolbens entsprechend Fig. 2 ist es allerdings bevorzugt, dass in einem ersten Kolbenweg/Druckbereich (beispielsweise 0 bis 0,5 bar) die Umgehung nicht freigegeben ist, diese sich also in einem Unwirksam-Zustand befindet und dementsprechend kein Spülen der Druckkammer auf die beschriebene Art und Weise stattfindet. In einem zweiten Kolbenweg/Druckbereich (beispielsweise 0,5 bis 1,5 bar) kann dann die Druckkammer über die Umgehung mit der zugeordneten Fliehkraft/Druckausgieichskammer oder - allgemeiner - mit der Umgebung verbunden sein. Wird dann das Druckniveau an bzw. in den Steuer/Regelbereich der Kupplungsanordnung angehoben, wird vorzugsweise das Spülen der Druckkammer wieder beendet, indem der Betätigungskolben die Umgehung unwirksam schaltet, etwa dadurch, dass er über einen entsprechenden Endbereich der Umgehung hinwegfährt.

Durch die Zuordnung eines Unwirksam-Zustands zu einem drucklosen Zustand bzw. Zustand geringen Drucks der Druckkammer wird erreicht, dass die Druckkammer über die Umgehung nicht leerlaufen kann, wenn an der Druckkammer kein hydraulischer Betätigungsdruck anliegt. Wird dann der Druck auf ein Niveau angehoben, dass der Betätigungskolben so weit gegen die Rückstellfeder verfahren ist, dass die Umgehung wirksam geschaltet ist, erfolgt auf Grund des anliegenden Drucks in der Druckkammer ein Spülen zumindest des radial innen gelegenen Volumens derselben. Dies ist insoweit besonders zweckmäßig, als dass sich in diesem Bereich die beim Steuern/Regeln störende zentrifugierte/auszentrifugierte Luft einer möglicherweise vorhandenen Öl-Luft-Suspension und das aus einer vorangehenden Leckage resultierende Luftvolumen befindet. Ein weiteres Verfahren des Kolbens in Einrückrichtung beendet dann das Spülen, wobei, wie schon erwähnt, besonders bevorzugt eine derartige Ausgestaltung ist, dass in der Nähe des Schleifpunktes der Kupplung das Spülen der Druckkammer bereits beendet ist.

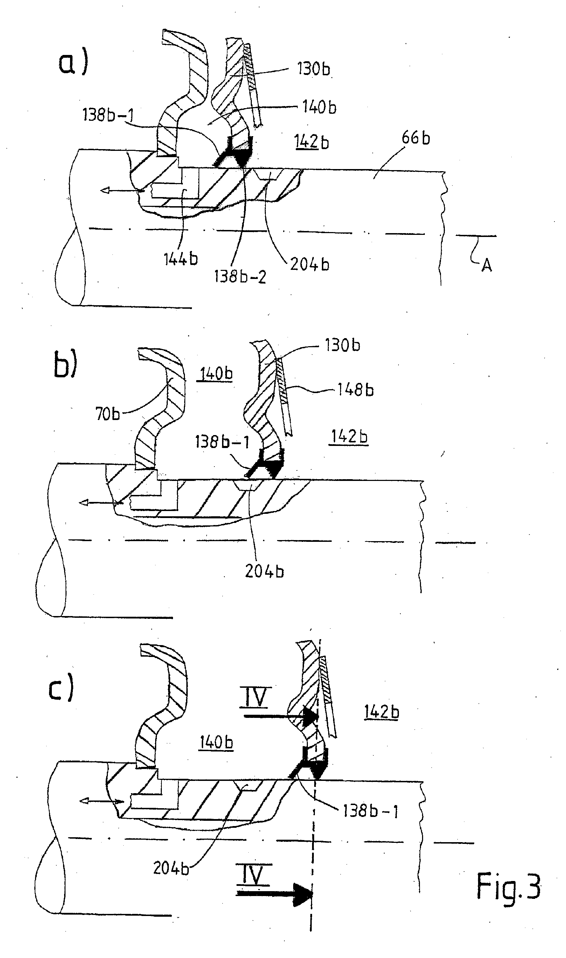

Fig. 3 zeigt den genannten Zuständen einer Umgehung der genannten Art entsprechende Kolbenpositionen. Gemäß Fig. 3a ist die Dichtungslippe 138b-1 und sogar der Führungswulst 138b-2 zwischen der Mündung des Zuführkanals 144b in den der Druckkammer 140b und der die Umgehung bildenden Aussparung 204b angeordnet, so dass sich die Umgehung bzw. Aussparung vollständig in der Fliehkraft-Druckausgleichskammer 142b befindet. Der Betätigungskolben 130b ist in seiner Ruheposition gezeigt, die er bei verschwindendem Hydraulikdruck in der Druckkammer 140b einnimmt. Die Umgehung 204b nimmt damit einen ersten Unwirksam-Zustand ein.

Nach Fig. 3b ist der Betätigungskolben 130b gegen die Rückstellkraft der Feder 148b in Einrückrichtung verschoben, und zwar in eine Axialposition, in der die Dichtungslippe 138b-1 bzw. deren Dichtungskante in einem mittleren Axialbereich der Umgehung 204b angeordnet ist, so dass die Umgehung ihren Wirksam-Zustand einnimmt und dementsprechend die Druckkammer 140b durch die Umgehung 204b in die Druckausgleichskammer 142b entlüftbar bzw. spülbar ist, genauer zwangsläufig dorthin entlüftet bzw. gespült wird.

Gemäß Fig. 3c hat dann auf Grund eines entsprechend angestiegenen Hydraulikdrucks in der Druckkammer 140b die Dichtkante der Dichtungslippe 138b-1 die Umgehung 204b in Einrückrichtung überfahren, so dass die Umgehung vollständig in der Druckkammer 140b angeordnet und dementsprechend unwirksam geschaltet ist, also ihren zweiten Unwirksam-Zustand einnimmt.

Fig. 4 zeigt eine mögliche Ausgestaltung des Dichtungsrings 138b. Zu erkennen ist, in einer geschnittenen Darstellung, der Führungs- oder Stützwulst 138b-2, der mehrere in Umfangsrichtung gegeneinander versetzte Aussparungen oder Schlitze, auch als Durchlässe bezeichenbar, aufweist, die in Fig. 4 mit 206b bezeichnet sind. Die Durchlässe 206b ermöglichen einen Abfluß des aus der Umgehung 204b in einem Zustand entsprechend Fig. 3b austretenden Fluids in die Druckausgleichskammer 142b. Ein Dichtring entsprechend Fig. 4 bietet den Vorteil, dass die Dichtungsfunktion und die Führungsfunktion von gesonderten Abschnitten des Dichtungsrings übernommen werden, die damit unabhängig voneinander im Hinblick auf die jeweilige Funktion optimierbar sind. Insbesondere kann die in Fig. 4 nicht gezeigte Dichtungslippe bzw. deren Dichtkante im Hinblick auf scharfe, eindeutig definierte Schaltpositionen betreffend das Umschalten zwischen den Zuständen der Umgehung optimiert sein.

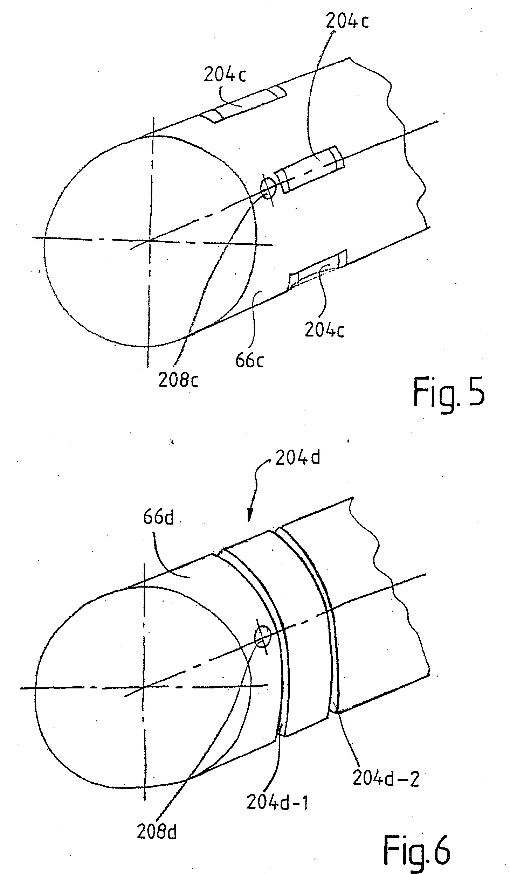

Betreffend die bauliche Ausgestaltung und Anordnung einer oder mehrerer erfindungsgemäßen, einem Betätigungskolben zugeordneten Umgehungen bestehen diverse Möglichkeiten. Beispielsweise kann die Umgehung, die je nach Ausgestaltung auch zutreffend als "Spülkanal" bezeichenbar ist, als sich axial oder radial erstreckende Nut oder Fase in die betreffende Wandung der Druckkammer, hier das Ringteil 66, eingefräst oder eingedreht sein, und zwar in einem Oberflächenabschnitt, über den der Betätigungskolben des hydraulischen Nehmerzylinders verfahren wird. Fig. 5 zeigt eine Ausgestaltung, bei der über den Außenumfang des nur schematisch dargestellten Ringteils 66c mehrere sich in axialer Richtung erstreckende, axial beidseitig begrenzte Nuten 204c verteilt sind, die gemeinsam oder jeweils einzeln als erfindungsgemäße "Umgehung" aufgefasst werden können. Die Nuten 204c sind axial derart auf dem Ringteil 66c angeordnet, dass sie bei in der Ruheposition befindlichen Betätigungskolben außerhalb der Druckkammer, nämlich vollständig innerhalb der zugeordneten Fliehkraft- Druckausgleichskammer liegen. In einem Druckbereich, der einem "Spülbereich" oder Wirksam-Zustand der Umgehung bzw. Umgehungen entspricht, ist der Betätigungskolben mit seiner radial innen liegenden, gegebenenfalls auf den Kolben aufvulkanisierten Dichtungslippe soweit in Richtung zum Lamellenpaket verfahren, dass sich die Dichtungslippe im Axialbereich der Nut 204c befindet. Im Kolbenraum befindliche Luft wie auch darin enthaltenes bzw. darin zugeführtes Drucköl kann dann entsprechend den oberen Erläuterungen wie in einer "Unterführung" unter der Dichtungslippe hindurch aus der Druckkammer in die Druckausgleichskammer entweichen. Wird der Kolben dann weiter gegen das Lamellenpaket verfahren, fährt die Dichtungslippe auch über das andere Ende der jeweiligen Nut hinweg, so dass wieder der Unwirksam-Zustand eingestellt ist. Es ist also entsprechend den Erläuterungen im Zusammenhang mit Fig. 3 eine Dreiteilung des Druckbereichs vorgesehen.

Fig. 6 zeigt eine Ausführungsvariante, bei der zwei sich in Umfangsrichtung erstreckende Ringnuten 204d-1 und 204d-2 in einem der axialen Länge der Nuten 204c gemäß Fig. 5 etwa entsprechendem Axialabstand in dem Außenumfang des Ringteils 66d vorgesehen sind, die über wenigstens einen im Ringteil 66d in axialer Richtung verlaufenden Verbindungskanal miteinander verbunden und gemeinsam mit diesem Verbindungskanal die Umgehung 204d bilden. Gegenüber einer im Prinzip möglichen Konstruktion mit einer einzigen, eine entsprechende axiale Breite aufweisende Ringnut bietet die Ausbildung der Umgehung mit zwei axial beabstandeten Ringnuten entsprechend geringerer axialer Weite den Vorteil, dass die Führung des Betätigungskolbens unter Vermittlung der Führungswulst am Außenumfang des Ringteils 66d nicht oder höchstens unwesentlich beeinträchtigt ist. Hierzu kann der Führungswulst zweckmäßigerweise eine entsprechend große Abmessung in Axialrichtung aufweisen, so dass er in die Ringnuten 204d-1 und 204d-2 höchstens unwesentlich eintreten kann.

Im Zuge der Kupplungsbetätigung überfährt die Dichtungslippe des Dichtungsrings die Ringnuten 204d-1 und 204d-2, und es erfolgt ein entsprechendes Umschalten zwischen einem der Ruheposition des Kolbens zugeordneten Unwirksam-Zustand, einem einem Zwischenpositionsbereich des Kolbens zugeordneten Wirksam-Zustand und einem Unwirksam-Zustand, der einem Steuer/Regel-Positionsbereich des Kolbens zugeordnet ist. Nach dem Überfahren der Ringnut 204d-1 durch die Dichtungslippe in Einrückrichtung bzw. nach dem Überfahren der Ringnut 204d-2 durch die Dichtungslippe in Ausrückrichtung kommt die Dichtungslippe mit ihrer Dichtungskante auf dem Umfangsoberflächenbereich des Ringteils 66d zwischen den beiden Ringnuten zur Anlage.

Zu den Figuren 5 und 6 ist noch zu erwähnen, dass die Mündungsöffnung des Druckmediumzuführkanals (vgl. Kanal 144a bzw. Kanal 144b) zu erkennen ist, die mit 208c bzw. 208d bezeichnet ist.

Betreffend die Nuten der Figuren 5 und 6 ist noch zu erwähnen, dass diese an ihren Rändern vorteilhaft mit Fasen ausgeführt sein können, um gewissermaßen Auflaufschrägen für die Dichtung zu bilden, die einerseits eine übermäßige Beanspruchung der Dichtung und andererseits übermäßige Gegenkräfte gegen eine Verschiebung des Betätigunskolbens durch Eingriff der Dichtung in die Nut zu vermeiden.

Soweit eine jeweilige Nut bzw. ein Kanal selbst die Umgehung bildet, das Fluid zur Umgehung der Dichtungslippe also in diese Nut eintreten und aus dieser Nut wieder austreten muss, muss die Nut oder - allgemeiner - die betreffende Aussparung axial breiter/länger als die axiale Auflagefläche der Dichtlippe sein. Ferner muss in diesem Falle die Nut bzw. die Aussparung so tief ausgestaltet sein, dass eine gegen die Führungs- oder Umfangsfläche der Druckkammerwandung vorgespannte, vorliegend nach radial innen vorgespannte Dichtlippe, sich nicht so weit in die Nut hinein erstrecken kann, dass sie an deren Boden bzw. an beiden Seitenwänden anliegt und so die Nut abdichten kann. Befindet sich neben der Dichtlippe noch ein gesonderter Stütz- oder Führungswulst, welcher den Kolben radial führen soll, so sollten hierin Durchlässe etwa entsprechend Fig. 4 vorgesehen sein.

Der im Wirksam-Zustand wirksame Strömungsquerschnitt der Umgehung bzw. Umgehungen, gegebenenfalls in Verbindung mit weiteren Durchlässen, gegebenenfalls den Durchlässen in der Stütz- oder Führungswulst, sollte in Abhängigkeit von dem in die Druckkammer zuführbaren Druckmediumstrom so klein gehalten werden, dass eine hinreichende Menge an Druckmedium in den Druckraum gefördert werden kann, derart, dass ein hinreichender, auf den Betätigungskolben wirkender Betätigungsdruck in der Druckkammer aufbaubar ist, um den Kolben gegen die Rückstellkraft der zugeordneten Rückstellfederanordnung in Einrückrichtung verschieben zu können.

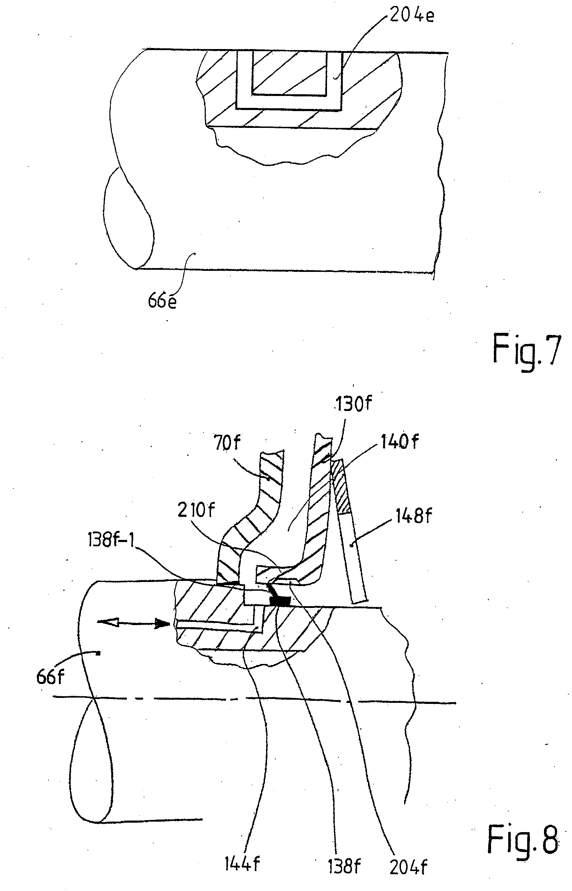

Fig. 7 zeigt noch eine weitere Ausgestaltungsmöglichkeit für eine einem Betätigungskolben zugeordnete Umgehung, die gemäß Fig. 7 als in der Wandung des Ringkanals 66e ausgebildeter Umgehungskanal 204e mit zwei sich radial erstreckenden und in der Druckkammer bzw. der Fliehkraft-Druckausgleichskammer mündenden Abschnitten und einem diese Abschnitte verbindenden, sich axial erstreckenden Abschnitt ausgeführt ist.

Man kann die Umgehung auch in einen unter Vermittlung einer stationären Dichtung 138f am Außenumfang des Ringteils 66f geführten Führungsoder Flanschabschnitt 210f des Betätigungskolbens 130f vorsehen. Fig. 8 zeigt eine entsprechende Ausgestaltung, bei der eine Umgehung in Form einer Aussparung 204f in diesem Kolbenabschnitt vorgesehen ist. Der Kolben fährt mit dieser Aussparung über die Dichtungslippe 138f-1 der Dichtung 138f hinweg, und es erfolgt in entsprechender Weise ein Schalten zwischen wenigstens einem Unwirksam-Zustand und einem Wirksam-Zustand der Umgehung 204f in Abhängigkeit von der Bewegung des Kolbens 130f.

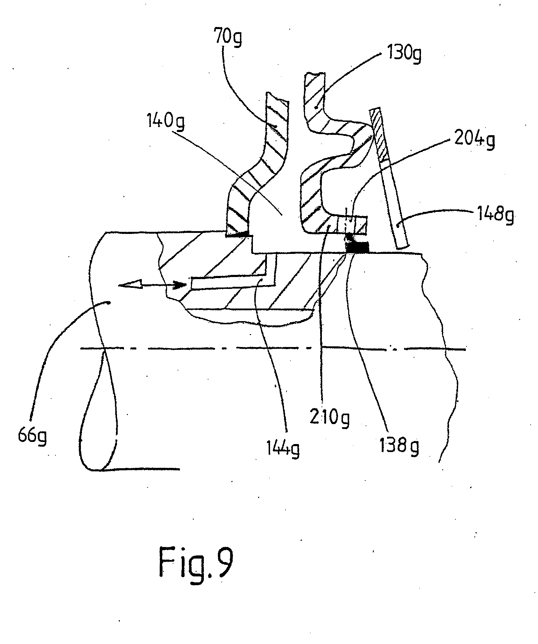

Allgemein kann man vorteilhaft Nutungen oder Kanäle in einem geeigneten, gegebenenfalls flanschartigen Führungsabschnitt des Betätigunskolbens vorsehen, beispielsweise einfräsen. Eine andere Möglichkeit ist, einfach eine radiale Durchgangsöffnung, gegebenenfalls Bohrung 204g in einem derartigen Kolbenabschnitt vorzusehen, wie in Fig. 9 dargestellt. Die Durchgangsöffnung liegt in einem ersten Kolbenverfahrbereich innerhalb der Druckkammer und in einem zweiten Verfahrbereich des Kolbens außerhalb der Druckkammer, so dass ein einem niedrigen oder verschwindenden Betätigungsdruck zugeordneter Wirksam-Zustand und ein höheren Drücken zugeordneter Unwirksam-Zustand vorgesehen ist. Man kann durchaus aber auch einen einem niedrigen bzw. verschwindenden Druck zugeordneten Unwirksam-Zustand, einen einem Zwischendruckbereich zugeordneten Wirksam-Zustand und einen höheren Drücken zugeordneten Wirksam-Zustand vorsehen, so dass ein Leerlaufen der Druckkammer ohne anliegenden Betätigungsdruck verhindert wird.

Bei den vorangehend erläuterten Ausführungsbeispielen wurde davon ausgegangen, dass die Druckkammer über die Umgehung bzw. die Umgehungen mit einem dem hydraulischen Nehmerzylinder zugeordneten Fliehkraft-Druckausgleichsraum verbindbar ist, in dem ein geringerer Druck herrscht. Die in den Ausgleichsraum eingespülte Luft oder Öl-Luft-Suspension kann dann über die radial innen liegende Ein-/Auslassöffnung für das als Ausgleichsmedium dienende Kühlöl aus dem Ausgleichsraum abfließen bzw. aus diesem durch nachgeführtes Kühlöl verdrängt werden. Im Falle einer Ausgestaltung des Fliehkraft-Druckausgleichsraums entsprechend dem Ausgleichsraum 142 der radial inneren Kupplungsanordnung gemäß Fig. 1 gelangt das aus der Druckkammer abfließende Fluid gar nicht in das effektive Fliehkraft-Ausgleichsvolumen, sondern kann durch die Öffnung bzw. Öffnungen 156 nach radial außen abfließen.

Es sollte erwähnt werden, dass es keineswegs zwingend ist, dass eine dem hydraulischen Nehmerzylinder zugeordnete Fliehkraft-Druckausgleichskammer vorgesehen ist. Im Falle einer Doppelkupplung, beispielsweise entsprechend Fig. 1, können beide Kupplungsanordnungen bzw. deren hydraulische Nehmerzylinder jeweils mit einer erfindungsgemäßen, dem jeweiligen Betätigungskolben zugeordneten Umgehung ausgeführt sein. Jedem Kolben kann dann jeweils wenigstens eine eigene Umgehung in der betreffenden Druckkammerwandung, im Falle einer Konstruktion entsprechend Fig. 1 im Außenumfang des Ringteils 66, zugeordnet sein, oder der Kolben selbst ist mit einer entsprechenden Umgehung ausgeführt.

Die Erfindung ist allgemein auf rotierende oder nicht-rotierende hydraulische Nehmerzylinder bzw. hydraulische Nehmerzylinderanordnungen anwendbar. Im Falle eines nicht rotierenden hydraulischen Nehmerzylinders wird man die Umgehung in einem oberen Bereich der Druckkammer vorsehen, nämlich in einem solchen Bereich, in dem sich die Luft bzw. eine Luft-Druckmedium-Suspension auf Grund der Gravitationskraft und der größeren Dichte des Druckmediums befinden wird. Die sich auf die Beispiele der Figuren 2 bis 9 beziehenden Erläuterungen und Vorschläge können entsprechend auf derartige hydraulische Nehmerzylinder oder allgemein Nehmerzylinderanordnungen angewendet werden.

## Patentansprüche

1. Kupplungseinrichtung für einen Kraftfahrzeug-Antriebsstrang (10) zur Momentenübertragung zwischen einer Antriebseinheit und einem Getriebe des Anstriebsstrangs, umfassend wenigstens eine Kupplungsanordnung (64, 72), die eine einer Abtriebswelle (14) der Antriebseinheit zugeordnete Eingangsseite und eine einer Getriebeeingangswelle (22 bzw. 24) zugeordnete Ausgangsseite aufweist und die vermittels wenigstens eines in die Kupplungseinrichtung (12) integrierten hydraulischen Nehmerzylinders betätigbar ist, der einen an wenigstens einer Zylinderwand des Nehmerzylinders verschiebbar geführten, eine Druckkammer (118 bzw. 140) des Nehmerzylinders begrenzenden Betätigungskolben (110 bzw. 130) aufweist, **gekennzeichnet durch** wenigstens eine dem Betätigungskolben (130a; 130b; 130f; 130g) zugeordnete Umgehung (204a; 204b; 204c; 204d; 204e; 204f; 204g) in der Zylinderwand (202a) oder/und einem an der Zylinderwand geführten Abschnitt (210f; 210g) des Betätigungskolbens, die vermittels einer Verschiebebewegung des Betätigungskolbens zwischen wenigstens einem Wirksam-Zustand und wenigstens einem Unwirksam-Zustand umschaltbar ist, derart, dass im Wirksam-Zustand in die Druckkammer (140a; 140b; 140f; 140g) zugeführtes bzw. darin enthaltenes hydraulisches Druckmedium und - soweit vorhanden - in der Druckkammer enthaltene Luft bzw. eine darin enthaltene Luft-Druckmedium-Mischung zumindest teilweise über die Umgehung aus der Druckkammer abführbar ist und dass im Unwirksam-Zustand im Wesentlichen kein Druckmedium über die Umgehung aus der Druckkammer abführbar ist.

2. Kupplungseinrichtung nach Anspruch 1, **dadurch gekennzeichnet, dass** der Betätigungskolben (130a; 130b; 130f; 130g) in einer ersten Verschiebeposition oder einem ersten Verschiebepositionsbereich, der/die einem Bereich niedrigen Betätigungsdrucks oder/und verschwindendem Betätigungsdruck in der Druckkammer (140a; 140b; 140f; 140g) zugeordnet ist, einen ersten Unwirksam-Zustand einstellt, dass der Betätigungskolben in einer zweiten Verschiebeposition oder einem zweiten Verschiebepositionsbereich, der/die einem erhöhten Betätigungsdruck oder einem Bereich erhöhten Betätigungsdrucks in der Druckkammer zugeordnet ist, den Wirksam-Zustand einstellt und dass der Betätigungskolben in einer dritten Verschiebeposition oder einem dritten Verschiebepositionsbereich, der/die einem noch höheren Betätigungsdruck oder einem Bereich noch höheren Betätigungsdrucks zugeordnet ist, einen zweiten Unwirksam-Zustand einstellt.

3. Kupplungseinrichtung nach Anspruch 1, **dadurch gekennzeichnet, dass** der Betätigungskolben (130a; 130b; 130f; 130g) in einer ersten Verschiebeposition oder einem ersten Verschiebepositionsbereich, der/die einem Bereich niedrigen Betätigungsdrucks oder/und verschwindenden Betätigungsdruck in der Druckkammer (140a; 140b; 140f; 140g) zugeordnet ist, den Wirksam-Zustand einstellt und dass der Betätigungskolben in einer zweiten Verschiebeposition oder einem zweiten Verschiebepositionsbereich, der/die einem höheren Betätigungsdruck oder einem Bereich höheren Betätigungsdrucks in der Druckkammer zugeordnet ist, den Unwirksam-Zustand einstellt.

4. Kupplungseinrichtung nach Anspruch 2 oder 3, **dadurch gekennzeichnet, dass** die Umgehung (204a; 204b; 204c; 204d; 204e; 204f; 204g) bei Erhöhung des Drucks in der Druckkammer (140a; 140b; 140f; 140g) vor Erreichen des Schleifpunkts der Kupplungsanordnung vom Wirksam-Zustand in den Unwirksam-Zustand bzw. den zweiten Unwirksam-Zustand übergeht.

5. Kupplungseinrichtung nach einem der Ansprüche 1 bis 4, **dadurch gekennzeichnet, dass** der Betätigungskolben (130a; 130b; 130f; 130g) die Druckkammer (140a; 140b; 140f; 140g) von einer zugeordneten Fliehkraft-Druckausgleichskammer (142a; 142b) trennt, die ein Druckausgleichsmedium aufnimmt, und dass die Umgehung (204a; 204b; 204c; 204d; 204e; 204f; 204g) im Wirksam-Zustand aus der Druckkammer in die Fliehkraft-Druckausgleichskammer führt.

6. Kupplungseinrichtung nach einem der Ansprüche 1 bis 5, **dadurch gekennzeichnet, dass** wenigstens ein Kühlmediumstrom zu wenigstens einem Lamellenpaket (74 bzw. 76) der Kupplungseinrichtung (12), insbesondere einem Lamellenpaket (74 bzw. 76) der als Lamellen-Kupplungsanordnung ausgeführten Kupplungsanordnung (64 bzw. 72), zuführbar ist, und dass aus der Druckkammer (140a; 140b; 140f; 140g) über die Umgehung (204a; 204b; 204c; 204d; 204e; 204f; 204g) abgeführtes Fluid dem Kühlmediumstrom zuleitbar ist.

7. Kupplungseinrichtung nach einem der Ansprüche 1 bis 6, **dadurch gekennzeichnet, dass** der Betätigungskolben (130a; 130b; 130f; 130g) und die Zylinderwand (202a) unter Vermittlung einer wenigstens eine Dichtung aufweisenden Dichtungs- und Führungsanordnung (138a; 138b; 138f; 138g) in gegenseitigem Dichtungs- und Führungseingriff stehen, die wenigstens einen Dichtungsabschnitt (138a-1; 138b-1; 138f-1) und wenigstens einen gegenüber dem Dichtungsabschnitt in Verschieberichtung des Betätigungskolbens versetzten Führungsabschnitt (138a-2; 138b-2) aufweist, wobei der Führungsabschnitt wenigstens einen Durchlass (206b) aufweist, der Teil der Umgehung (204a; 204b; 204c; 204d; 204e; 204f; 204g) ist oder im Wirksam-Zustand einen Abfluß von über die Umgehung aus der Druckkammer (140a; 140b; 140f; 140g) zugeführtem Fluid ermöglicht.

8. Kupplungseinrichtung nach Anspruch 7, **dadurch gekennzeichnet, dass** die Dichtungs- und Führungsanordnung (138a; 138b; 138f; 138g) wenigstens einen Dichtungsring umfasst, der einen Führungswulst als Führungsabschnitt (138a-2; 138b-2) und eine Dichtungslippe als Dichtungsabschnitt (138a-1; 138b-1; 138f-1) aufweist.

9. Kupplungseinrichtung nach Anspruch 8, **dadurch gekennzeichnet, dass** der Führungswulst (138a-2; 138b-2) mehrere in Umfangsrichtung gegeneinander versetzte Aussparungen (206b) aufweist, die als Durchlässe dienen.

10. Kupplungseinrichtung nach einem der Ansprüche 1 bis 9, **dadurch gekennzeichnet, dass** die Umgehung (204a; 204b; 204c; 204d; 204e; 204f; 204g) wenigstens eine Aussparung oder Öffnung oder Fase in oder an der Zylinderwand (202a) oder/und in oder an dem an der Zylinderwand geführten Abschnitt des Betätigungskolbens (130a; 130b; 130f; 130g) aufweist.

11. Kupplungseinrichtung nach Anspruch 10, **dadurch gekennzeichnet, dass** wenigstens eine Aussparung in Form einer sich im Wesentlichen in der Verschieberichtung des Betätigungskolbens (130a; 130b; 130f; 130g) erstreckenden Nut (204a; 204b; 204c; 204f) vorgesehen ist.

12. Kupplungseinrichtung nach Anspruch 10 oder 11, **dadurch gekennzeichnet, dass** wenigstens eine Aussparung in Form einer sich im Wesentlichen orthogonal zu der Verschieberichtung des Betätigungskolbens erstreckenden Nut (204d), vorzugsweise in Form einer Ringnut (204d-1; 204d-2), vorgesehen ist.

13. Kupplungseinrichtung nach Anspruch 11 oder 12, **dadurch gekennzeichnet, dass** die Nut (204a; 204b; 204c; 204d; 204f) an wenigstens einem diese begrenzenden Rand mit einer Fase ausgeführt ist.

14. Kupplungseinrichtung nach einem der Ansprüche 10 bis 13, **dadurch gekennzeichnet, dass** die Umgehung wenigstens einen eine Eingangsöffnung und eine Ausgangsöffnung aufweisenden Kanal (204e; 204f; 204g) in wenigstens einem die Zylinderwand (202a) bildenden Bauteil oder/und in dem an der Zylinderwand geführten Abschnitt (210f; 210g) des Betätigungskolbens (130f; 130g) aufweist, wobei der Kanal vorzugsweise von wenigstens einer Bohrung (204g) gebildet ist.

15. Hydraulische Nehmerzylinderanordnung, umfassend wenigstens einen hydraulischen Nehmerzylinder, der einen an wenigstens einer Zylinderwand (202a) des Nehmerzylinders verschiebbar geführten, eine Druckkammer (140a; 140b; 140f; 140g) des Nehmerzylinders begrenzenden Betätigungskolben (130a; 130b; 130f; 130g) aufweist,
wobei wenigstens eine dem Betätigungskolben zugeordnete Umgehung (204a; 204b; 204c; 204d; 204e; 204f; 204g) in der Zylinderwand oder/und einem an der Zylinderwand geführten Abschnitt (210f; 210g) des Betätigungskolbens vorgesehen ist, die vermittels einer Verschiebebewegung des Betätigungskolbens zwischen wenigstens einem Wirksam-Zustand und wenigstens einem Unwirksam-Zustand umschaltbar ist, derart, dass im Wirksam-Zustand in die Druckkammer zugeführtes bzw. darin enthaltenes hydraulisches Druckmedium und - soweit vorhanden - in der Druckkammer enthaltene Luft bzw. eine darin enthaltene Luft-Druckmedium-Mischung zumindest teilweise über die Umgehung aus der Druckkammer abführbar ist und dass im Unwirksam-Zustand im Wesentlichen kein Druckmedium über die Umgehung aus der Druckkammer abführbar ist, und
wobei der Betätigungskolben in einer ersten Verschiebeposition oder einem ersten Verschiebepositionsbereich, der/die einem Bereich niedrigen Betätigungsdrucks oder/und verschwindendem Betätigungsdruck in der Druckkammer zugeordnet ist, einen ersten Unwirksam-Zustand einstellt, wobei der Betätigungskolben in einer zweiten Verschiebeposition oder einem zweiten Verschiebepositionsbereich, der/die einem erhöhten Betätigungsdruck oder einem Bereich erhöhten Betätigungsdrucks in der Druckkammer zugeordnet ist, den Wirksam-Zustand einstellt und wobei der Betätigungskolben in einer dritten Verschiebeposition oder einem dritten Verschiebepositionsbereich, der/die einem noch höheren Betätigungsdruck oder einem Bereich noch höheren Betätigungsdrucks zugeordnet ist, einen zweiten Unwirksam-Zustand einstellt.

16. Hydraulische Nehmerzylinderanordnung, umfassend wenigstens einen hydraulischen Nehmerzylinder, der einen an wenigstens einer Zylinderwand (202a) des Nehmerzylinders verschiebbar geführten, eine Druckkammer (140a; 140b; 140f; 140g) des Nehmerzylinders begrenzenden Betätigungskolben (130a; 130b; 130f; 130g) aufweist,
wobei wenigstens eine dem Betätigungskolben zugeordnete Umgehung (204a; 204b; 204c; 204d; 204e; 204f; 204g) in der Zylinderwand oder/und einem an der Zylinderwand geführten Abschnitt (210f; 210g) des Betätigungskolbens vorgesehen ist, die vermittels einer Verschiebebewegung des Betätigungskolbens zwischen wenigstens einem Wirksam-Zustand und wenigstens einem Unwirksam-Zustand umschaltbar ist, derart, dass im Wirksam-Zustand in die Druckkammer zugeführtes bzw. darin enthaltenes hydraulisches Druckmedium und - soweit vorhanden - in der Druckkammer enthaltene Luft bzw. eine darin enthaltene Luft-Druckmedium-Mischung zumindest teilweise über die Umgehung aus der Druckkammer abführbar ist und dass im Unwirksam-Zustand im Wesentlichen kein Druckmedium über die Umgehung aus der Druckkammer abführbar ist, und
wobei der Betätigungskolben und die Zylinderwand unter Vermittlung einer wenigstens eine Dichtung aufweisenden Dichtungs- und Führungsanordnung (138a; 138b; 138f; 138g) in gegenseitigem Dichtungsund Führungseingriff stehen, die wenigstens einen Dichtungsabschnitt (138a-1; 138b-1; 138f-1) und wenigstens einen gegenüber dem Dichtungsabschnitt in Verschieberichtung des Betätigungskolbens versetzten Führungsabschnitt (138a-2; 138b-2) aufweist, wobei der Führungsabschnitt wenigstens einen Durchlass (206b) aufweist, der Teil der Umgehung ist oder im Wirksam-Zustand einen Abfluß von über die Umgehung aus der Druckkammer zugeführtem Fluid ermöglicht.

17. Nehmerzylinderanordnung nach Anspruch 15 oder/und Anspruch 16,
**dadurch gekennzeichnet, dass** sie für eine Rotation um eine Drehachse (A) ausgebildet ist, wobei die Umgehung (204a; 204b; 204c; 204d; 204e; 204f; 204g) in einer die Druckkammer (140a; 140b; 140f; 140g) nach radial innen begrenzenden Zylinderwand (202a) bzw. in einem radial inneren Abschnitt (210f; 210g) des Betätigungskolbens (130f; 130g) ausgeführt ist.

18. Nehmerzylinderanordnung nach wenigstens einem der Ansprüche 15 bis 17, **gekennzeichnet durch** die sich auf die Umgehung (204a; 204b; 204c; 204d; 204e; 204f; 204g) bzw. den Nehmerzylinder beziehenden Merkmale wenigstens eines der Ansprüche 1 bis 14.
